(19) Europäisches Patentamt
European Patent Office
Office européen des brevets

(11) **EP 2 411 349 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **10712054.5**

(22) Anmeldetag: **29.03.2010**

(51) Int Cl.:
**C04B 35/645** *(2006.01)* **C04B 37/02** *(2006.01)*

(86) Internationale Anmeldenummer:
**PCT/EP2010/054129**

(87) Internationale Veröffentlichungsnummer:
**WO 2010/112468 (07.10.2010 Gazette 2010/40)**

(54) **VERFAHREN ZUM HERSTELLEN EINER VERBINDUNG VON GRAPHIT UND TRÄGERMETALL, SOWIE VERBUNDELEMENT**

METHOD FOR MAKING A JOINT BETWEEN GRAPHITE AND A METALLIC SUBSTRATE, AND THE JOINED COMPONENT

PROCÉDÉ DE FABRICATION D'UN JOINT ENTRE GRAPHITE ET UN SUBSTRATE MÉTALLIQUE ET L'ASSEMBLAGE RESULTANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.03.2009 DE 102009014407**

(43) Veröffentlichungstag der Anmeldung:
**01.02.2012 Patentblatt 2012/05**

(73) Patentinhaber: **SGL Carbon SE**
**65201 Wiesbaden (DE)**

(72) Erfinder: **MERTINS, Hans-Christoph**
**48565 Steinfurt (DE)**

(56) Entgegenhaltungen:
EP-A1- 0 353 820    EP-A1- 1 025 938
EP-A2- 0 616 884    WO-A1-03/027043
DE-A1- 2 811 387    US-A- 4 132 917
US-A- 5 100 049    US-A- 5 113 052
US-A- 5 322 740    US-A1- 2003 006 269

**Beschreibung**

Die Erfindung betrifft ein Verfahren zur Herstellung einer Verbindung zwischen einer Trägermetallschicht und einer Graphitschicht, sowie ein Verbundelement umfassend eine Graphitschicht und eine Trägermetallschicht.

Graphit hat für viele Anwendungen gute mechanische, thermische, elektrische und chemische Eigenschaften, ist kostengünstig und umweltverträglich. Deshalb wird z.B. Graphit zur Auskleidung von Behältnissen eingesetzt, in denen Hochtemperaturprozesse ablaufen. Graphit hat gegenüber Kunststoffen den Vorteil, dass er sich chemisch stabil und neutral gegenüber Prozessen, insbesondere auch bei höheren Temperaturen, verhält. Wegen seiner formbaren Eigenschaften findet Graphit Anwendung als Dichtungsmaterial in Hochtemperatur- und Hochdruckanlagen. Aufgrund der elektrischen Leitfähigkeit kann Graphit zu Spitzen geformt oder als Überzug von Spitzenelektroden zur Erzeugung hoher elektrischer Felder eingesetzt werden. Ebenso kommt Graphit als Flachelektrode in Batterien zum Einsatz.

Im Folgenden sollen durch die Bezeichnung "Graphit" bzw. "Graphitschicht" jegliche graphitbasierten Substanzen bzw. Schichten erfasst werden, wie z.B. durch Verpressen von expandiertem Graphit erhaltene Graphitformkörper.

Um die Belastbarkeit von Graphitschichten gegenüber Biege- und Zugkräften zu verbessern, werden sie bisher ein- oder beidseitig mit einem Metallträger verbunden. Es ist erwünscht, dass durch diese Verbindungen die mechanischen, thermischen, elektrischen und chemischen Eigenschaften der Graphitschicht nicht verschlechtert werden. Im Stand der Technik sind außer formschlüssigen Verbindungen keine Verbindungen bekannt, bei welchen diese Eigenschaften des Graphits nach Fixierung auf einem Metallträger beibehalten werden können.

Bekannt ist die Herstellung einer Haftverbindung zwischen einer Graphitschicht und einem Metallträger durch ein mechanisches Fixieren und durch ein Verkleben. Eine mechanische Fixierung der Graphitschicht kann durch eine Verzahnung mit einem Metallträger erfolgen, die sich durch ein Verpressen mit einer netzförmigen oder rauen Trägermetalloberfläche ergibt. Bei einer klebenden Verbindung wird die Graphitschicht mit dem Trägermetall durch organische oder anorganische Klebstoffe haftend verbunden.

Die Nachteile bestehen bei einer mechanischen Fixierung einer Graphitschicht auf einem Metallträger in einer Beschädigung der Graphitschicht. Wegen der Oberflächenrauhigkeit vorliegende Metallspitzen etwa erzeugen lokale Durchbrüche in der Graphitschicht, so dass an diesen Stellen z.B. die thermisch isolierenden, oder die elektrisch leitenden oder auch die dichtenden Eigenschaften verschlechtert werden. Des Weiteren wird bei einem Verpressen des Graphits auf den Metallträger der Graphit so stark komprimiert, dass er beispielsweise nicht mehr als Dichtungsmaterial verwendet werden kann. Bei einer mechanischen Fixierung von Mikroelektroden oder anderen Kleinteilen aus Graphit durch Verpressen verändert sich bei der Kraftausübung ihre Form.

Auch Klebeverbindungen besitzen Nachteile. Hier ist die Klebstoffschicht zwischen Metallträger und Graphitschicht typischerweise mindestens einige Mikrometer dick. Diese zusätzliche Klebeschicht erfüllt für den eigentlichen Einsatz der Graphitschicht oft nicht die geforderten chemischen, thermischen, elektrischen und mechanischen Bedingungen und schränkt somit den Einsatzbereich des geklebten Graphits ein. Der Klebstoff kann insbesondere bei Einsatz im Vakuum ausgasen und dieses dadurch verunreinigen, bzw. sich auf andern Bauteilen wieder absetzen und somit deren Oberflächeneigenschaften verändern. Bei hohen Temperaturen kann sich der Klebstoff zersetzen, und seine Bestandteile können in Prozessgase bzw. Prozessflüssigkeiten gelangen und somit den Prozessablauf beeinflussen. Bei Anwendungen der Graphitschicht als Druckdichtung können aufgrund unterschiedlichen mechanischen Verhaltens von Klebstoff und Graphitschicht Leckageprobleme auftreten. Zusätzlich wird bei Zersetzung und Auslösung des Klebstoffs die Anpresskraft zwischen den dichtenden Flanschen und damit die Dichtwirkung reduziert. Wird die Klebung durch überhöhte Temperatur weich oder löst sie sich auf, so können sich die Graphitschichten verschieben oder ganz lösen. Im Fall einzeln fixierter Mikroelektroden würde somit der komplette Aufbau zerstört werden.

Bei einigen Anwendungen muss ein elektrischer Kontakt zwischen Metallträger und Graphitschicht gewährleistet sein, so dass elektrisch leitfähige Klebstoffe verwendet werden müssen, was mit hohen Kosten verbunden ist.

In einigen Verfahren müssen die mit Klebstoff belegten Schichten (Metallträger und Graphit) bei sehr hohen Drücken und sehr hohen Temperaturen über lange Zeit, wie etwa über mehrere Stunden, miteinander verpresst werden. Dies hat beispielsweise wegen der entsprechend aufwendigen Auslegung der notwendigen Pressen hohe Produktionskosten zur Folge.

Bekannt ist weiterhin ein Verbinden von Graphit und Metall durch Vakuum-Löten. Dieses Verfahren muss unter Vakuumbedingungen durchgeführt werden und ist daher aufwendig. Bei Verfahren, die Vakuum-Löten mit einem Karbonisierungsprozess kombinieren, werden Metallpulver aufgestreut und bei sehr hoher Temperatur eingeschmolzen, was sie noch aufwendiger macht.

EP 0 616 884 A2 beschreibt ein Verfahren zur Herstellung eines Schichtstoffs aus Metall und Graphit.

US Patent Nr. 5,100,049 beschreibt ein Verfahren zur Verbindung von Kohlenstoff-Kohlenstoff und Metall-Matrix Kompositen.

US Patent Nr. 5,322,740 beschreibt eine Festphasenverbindung zwischen Aluminiumlegierungen und/oder Magnesiumlegierungen und ein Verfahren zu deren Herstellung.

US Patent Nr. 5,113,052 beschreibt ein Verfahren zum Ofenlöten von zwei Teilen in abgereicherter oder kontrollierter Atmosphäre.

Aufgabe der Erfindung ist, ein Verfahren zum Herstellen einer Verbindung zwischen Graphit und einem Trägermetall bereitzustellen, sowie ein Verbundelement umfassend eine Graphitschicht und eine Trägermetallschicht, wobei die Verbindung unter thermischer und mechanischer Belastung stärker als die Eigenfestigkeit des Graphits sein soll. Diese Verbindung zwischen Graphit und Trägermetall soll eine gute elektrische Leitfähigkeit und thermische Leitfähigkeit besitzen, sowie chemisch stabil sein. Ihr elasto-plastisches Verhalten soll im Vergleich zu demjenigen der Graphitschicht vernachlässigbar klein sein.

Gelöst wird die Aufgabe mit einem Verfahren nach Anspruch 1.

Gemäß dem erfindungsgemäßen Verfahren wird eine Verbindung zwischen einer Trägermetallschicht und einer Graphitschicht durch die folgenden Schritte hergestellt:

- Bereitstellen einer Trägermetallschicht
- Bereitstellen einer mit der Trägermetallschicht zu verbindenden Graphitschicht
- Anordnen einer Haftschicht, die zumindest ein Metall enthält, zwischen der Trägermetallschicht und der Graphitschicht
- Verbinden der Trägermetallschicht mit der Graphitschicht, wobei das Verbinden einen Diffusionsschritt umfasst, in dem das zumindest eine Metall der Haftschicht angeregt wird, zumindest teilweise in die Graphitschicht und die Trägermetallschicht einzudringen, wobei das Metall in der Festphase verbleibt, wobei die Haftschicht als Metall Silber enthält.

Dadurch wird erfindungsgemäß ohne eine Klebeverbindung, bei der ein Klebstoff benötigt wird, eine Verbindung hoher Festigkeit, hoher elektrischer und thermische Leitfähigkeit und hoher chemischer Stabilität erzielt. Die Erfindung kommt auch ohne eine mechanische Verbindung aus, bei der die Graphitschicht in einer rauen oder besonders strukturierten Trägermetalloberfläche durch Verpressung verhakt wird, wobei gemäß der Erfindung eine solche mechanische Verbindung jedoch zusätzlich zur Verbindung durch den Diffusionsschritt vorliegen kann. Im Gegensatz zu anderen Verbindungsmethoden schmilzt das Metall dabei nicht auf, sondern verbleibt in der der Festphase. Vorzugsweise verbleibt das Metall während des gesamten Verfahrens vollständig in der Festphase.

Der Begriff "Graphitschichten" umfasst dünne freitragende oder aufgebrachte Filme, Folien oder auch dicke Platten. Der Begriff der Schichten soll verdeutlichen, dass oberflächennahe Bereiche von Graphit und von Trägermetall miteinander verbunden werden können. Dies kann insbesondere ein flächiger Bereich sein, der mit einem anderen flächigen Bereich verbunden werden soll.

Vorteilhafte Ausgestaltungen und Fortbildungen des erfindungsgemäßen Verfahrens sind in den abhängigen Unteransprüchen angegeben.

Vorzugsweise besteht die Haftschicht aus Ag.

Die Haftwirkung basiert auf dem Eindringen von Ag-Atomen aus der Haftschicht in die beidseitig angrenzenden, zu verbindenden Trägermetallschicht und Graphitschicht. In beiden Materialien nehmen die Metall-Atome Gitter- oder Zwischengitterplätze ein und gehen bevorzugt Bindungen mit den dortigen Atomen ein. Die Bindung des Ag an Graphit lässt sich durch die geschichtete Gitterstruktur des Graphits erklären. Innerhalb einer Schichtebene des Graphits wirken zwischen den Kohlenstoffatomen (C) starke kovalente $\sigma$-Bindungen, die auf der Ausbildung von $sp^2$-Hybridbindungen basieren. Hierbei orientieren sich die $p_x$- and $p_y$-Orbitale trigonal. Der Abstand zwischen benachbarten C-Atomen beträgt in den Graphitebenen 0,142 nm. Das dritte Elektron des $p_z$-Orbitals zeigt senkrecht zu dieser Schichtebene und führt zu einer schwachen $\pi$-Bindung, die auf Van-der-Waals-Kräften beruht. Der Atomabstand zwischen den Ebenen ist mit 0,335 nm deutlich größer als innerhalb der Ebenen. Vermutlich lagern an dem Elektron des $p_z$-Orbitals Ag-Atome mit nur einem äußeren s-Elektron gut an und können somit stark gebunden werden. Andererseits erlaubt der relativ große Abstand zwischen den Graphitebenen eine Einlagerung der Ag-Atome trotz ihres großen Durchmessers von 0,306 nm und führt zur besseren Verbindung zwischen tief in der Graphitschicht eingelagerten und näher zu einer Oberfläche der Graphitschicht liegenden Ag-Atomen, was die stabile Bindung der Haftschicht zum Graphit erzeugt. Andererseits ermöglicht auch die vergleichsweise große Gitterkonstante von 0,41 nm in Ag-Kristallen die Einlagerung von C-Atomen auf Zwischengitterplätzen, was zur Verzahnung beider Schichten beitragen kann. Aufgrund dieses Bindungsprozesses kann vorzugsweise bereits eine aus nur wenigen Atomlagen bestehende Ag-Schicht zur Herstellung einer stabilen Verbindung von Graphit und Trägermetall ausreichen.

Nach einer bevorzugten Ausführungsform enthält die Trägermetallschicht zumindest ein Trägermetall oder eine Trägermetalllegierung aus der Gruppe bestehend aus Eisen, Stahl, Edelstahl, Gold, Palladium, Titan, Kupfer, Bronze, Messing, Chrom, Nickel, Zink, Zinn, Indium, Mangan, Aluminium, Blei und Cadmium oder eine Legierung mit zumindest einem dieser Metalle oder Metalllegierungen daraus. Geeignet können für die Anwendung in Batterien außer Blei und Cadmium alle anderen bekannten Batteriematerialien sein.

Die Bindung von Silber aus der Haftschicht an einen Edelstahlträger basiert vermutlich auf der Legierbarkeit von Ag mit Chrom (Cr) und mit Nickel (Ni), nicht aber auf der Bindung mit Eisen (Fe), mit dem es schlecht legierbar ist. Da Edelstahl ausreichende Anteile an Cr und Ni besitzt ist eine Bindung des Ag in Oberflächennähe des Edelstahlträgers möglich. Die Gitterabstände in Edelstahl liegen im Bereich von 0,3 nm und erlauben somit vermutlich die Einbindung von Ag-Atomen auch auf Zwischengitterplätzen. Entsprechendes gilt für die anderen oben genannten bevorzugten Trägermetalle bzw. Trägermetalllegierungen. Dabei müssen die genannten Metalle nicht den Hauptbestandteil einer Legierung bilden, sondern können im Bereich von lediglich bis zu 10 Gew.-%, insbesondere bis zu 5 Gew.-% oder noch niedrigeren Gehalten, wie etwa 0,1 bis 3 Gew.-% vorliegen.

Zusätzlich zum Einsatz von Silber als Metall in der Haftschicht kann z.B. ein Metall enthalten sein, das sich hinsichtlich seines Bindungsverhaltens und/oder Diffusionsverhaltens in Bezug auf die Trägermetallschicht und /oder Graphitschicht ähnlich wie Silber verhält. Unter einem ähnlichen Verhalten wird im Rahmen der Erfindung verstanden, dass das Metall in die Graphit- und Trägermetallschicht eindiffundieren kann und die für Silberatome weiter oben beschriebenen Bindungs- und Einlagerungsverhältnisse, wie etwa die Elektronenbindung zumindest teilweise eingeht. Bevorzugte Metalle oder Legierungsbestandteile der Haftschicht können beispielsweise Gold (Au), Kupfer (Cu), Platin (Pt), Indium (In), Chrom (Cr), Molybdän (Mo), Silicium (Si), Germanium (Ge), Zinn (Sn) und Blei (Pb) sein. Au und Cu haben wie Ag komplett gefüllte Atomschalen und besitzen nur ein einziges freies äußeres Elektron auf der s-Schale, das eine Bindung mit den sp-Orbitalen des Graphits eingehen kann. Bekannt sind beispielsweise die Bindungen $Ag_2C_2$ und $Cu_2C_2$. Cr und Mo besitzen ebenfalls ein äußeres s-Elektron und gefüllte bzw. halbgefüllte Schalen, so dass auch diese ein ähnliches Verhalten wie Silber zeigen. Si, Ge, Sn und Pb als Elemente der vierten Gruppe des Periodensystems können Bindungen an Graphit durch Hybridisierung mit den p-Elektronen eingehen. Diese Elemente können C-Atome in der Graphitebene partiell substituieren, sofern ihr Atomdurchmesser nicht zu groß ist. Ebenfalls können Bindungen durch Schwefelverbindungen, wie $Ag_2S_2$ eingegangen werden. Schwefel kommt häufig als Verunreinigung, beispielsweise in Kohlenstoff vor.

Bevorzugt umfasst der Diffusionsschritt einen Pressschritt und/oder einen Heizschritt. Unter Druck und oder einer erhöhten Temperatur wird das zumindest eine Metall der Haftschicht angeregt, in die Graphitschicht und die Trägermetallschicht zu diffundieren. Dabei hängen der notwendige Druck und/oder die notwendige Temperatur von dem Metall der Haftschicht und dem zumindest einen Trägermetall der Trägermetallschicht ab.

Vorteilhafterweise weist die Haftschicht vor dem Diffusionsschritt eine Dicke zwischen 1 nm und 100 nm, insbesondere zwischen 2 und 80 nm, bevorzugt zwischen 5 und 50 nm auf. Je geringer die Schichtdicke ist, desto geringer ist der Zeit- und Materialaufwand, der zum Bereitstellen der Haftschicht, beispielsweise durch Beschichten, nötig ist. Derart dünne Schichten reagieren aufgrund des sogenannten Gesetzes der zugeordneten Schubspannungen unempfindlich auf Schubspannungen. Schubspannungen werden durch Querkräfte hervorgerufen und treten bei Biegebelastungen, wie etwa bei einem Wickeln, auf. Ein gebogener Sandwichaufbau unterliegt somit in der Verbindungsebene einer Schubspannung, die bildlich gesprochen versucht, die verbundenen Schichten übereinander zu schieben, was zu einem Ablösen der Haftschicht führen kann. Je dünner die Haftschicht ist, desto höher ist die mechanische Widerstandsfähigkeit gegen ein Ablösen. Eine stärkere Dicke ermöglicht hingegen vorteilhafterweise, eine breitere Zwischenschicht in der Graphitschicht und/oder der Trägermetallschicht zu schaffen, in der Metall aus der Haftschicht eindiffundiert ist, was die mechanische Festigkeit der entstehenden Verbindung erhöhen kann.

Nach einer ersten Alternative ist oder wird die Haftschicht vor dem Diffusionsschritt auf zumindest eine der beiden zu verbindenden Schichten (Graphitschicht, Trägermetallschicht) aufgebracht. Dies ermöglicht insbesondere ein Anordnen einer besonders dünnen Haftschicht im Nanometerbereich.

Vorzugsweise ist oder wird die Haftschicht durch ein physikalisches (PVD) und/oder chemisches Gasphasenabscheidungsverfahren (CVD) auf zumindest eine der beiden zu verbindenden Schichten aufgebracht. Derartige Beschichtungsverfahren ermöglichen auf herkömmliche Weise ein Aufbringen homogener und hochwertiger Schichten bereits in der Dicke weniger Atomlagen bis hin zu mehreren hundert Nanometern. CVD und PVD sind etwa ein thermisches Verdampfen, Sputterverfahren (auch Kathodenzerstäuben genannt), Ionenplattieren, Clusterstrahltechnik (ICBD). Durch CVD- und PVD-Verfahren wird Metall der Haftschicht bereits innig mit Elementen zumindest einer der beiden zu verbindenden Schichten verbunden. Dadurch ist eine geringere Aktivierungsenergie nötig, um das Metall weiter eindiffundieren zu lassen. Somit unterscheidet sich der Verbindungsmechanismus der vorliegenden Erfindung von einem herkömmlichen Lötverfahren oder anderen herkömmlichen Verbindungstechniken.

Als Beschichtungsverfahren kommen auch andere bekannte Beschichtungsverfahren, wie Galvanisieren in Frage, insbesondere wenn dickere Schichten bis in den Mikrometerbereich als Haftschichten erwünscht sind. Im Gegensatz zu bekannten Lötverfahren tritt aber auch bei dickeren Schichten im Rahmen der Erfindung kein Auftreten einer Flüssigphase auf.

Nach einer zweiten Alternative wird als Haftschicht eine freitragende Folie, die das Metall enthält, wie etwa eine Metallfolie, eingesetzt. Dadurch wird ein Beschichtungsschritt umgangen, was beispielsweise vorteilhaft sein kann, wenn Beschichtungsanlagen nicht zur Verfügung stehen.

Vorzugsweise liegt eine Pressdauer des Pressschritts bei bis zu 60 min, insbesondere zwischen 5 und 50 min, insbesondere zwischen 10 und 40 min. Sie kann beispielsweise auch nur 1 min betragen. Somit kann in relativ kurzer Zeit ein Eindiffundieren des Metalls bewirkt werden. Um die Verbindung einer möglichst niedrigen Temperaturbelastung zu unterwerfen, kann eine lange Pressdauer in Verbindung mit einer niedrigen Temperatur vorteilhaft sein. Hohe Temperaturen lassen die zum Herstellen einer stabilen Verbindung notwendigen Pressdauern kürzer werden.

Vorteilhafterweise liegt eine Heiztemperatur des Heizschritts zwischen einem Drittel des Schmelzpunkts des Metalls und unterhalb des Schmelzpunkts des Metalls der Haftschicht. Dadurch wird ein Verflüssigen der Haftschicht bzw. des Metalls in der Haftschicht vermieden, das Metall dabei jedoch so stark angeregt, dass ein Diffusionsschritt stattfinden kann. Besonders bevorzugt liegt eine Heiztemperatur zwischen der Hälfte des Schmelzpunkts in °C und 5 K unter dem Schmelzpunkt, insbesondere bis 20 K, insbesondere 50 K unterhalb des Schmelzpunkts.

Beim Einsatz von Ag als Metall in der Haftschicht ist eine Heiztemperatur oberhalb von 300 °C, insbesondere oberhalb von 400 °C, insbesondere oberhalb von 500 °C vorteilhaft. Beim Einsatz von niedrigschmelzenden Metallen kann auch eine entsprechend niedrigere Heiztemperatur vorteilhaft sein, bei höher schmelzenden Metallen eine höhere. Wegen der Temperaturanfälligkeit von Graphit bei Temperaturen ab 550 °C, insbesondere ab 600 °C kann das Verfahren vorteilhaft unter Vakuum durchgeführt werden.

Es kann vorteilhaft sein, die Haftschicht teilbereichsweise oder ganzflächig auf die Graphitschicht und auf die Metallträgerschicht aufzubringen. Insbesondere kann die Haftschicht strukturiert auf der Graphitschicht und der Trägermetallschicht aufgebracht werden, wie etwa punktweise oder abschnittsweise. Dies kann beispielsweise vorteilhaft sein, um lokale Spannungen auszugleichen. Auch kann ein teilbereichsweises Aufbringen vorteilhaft sein, um bereits vorhandene Öffnungen nicht zu verschließen. Dies kann bei Sieben oder auch Membranen beispielsweise für Brennstoffzellen vorteilhaft sein.

Des Weiteren kann die Trägermetallschicht strukturiert vorliegen, wie etwa in Form von Inseln oder Punkten.

Es kann vorteilhaft sein, dass die Trägermetallschicht auf der Haftschicht mittels eines Beschichtungsverfahrens aufgebracht wird.

Mittels eines Beschichtungsverfahrens lassen sich Trägermetallschichten besonders gut strukturieren, sowie in gleichmäßigen Dicken aufbringen.

Vorzugsweise wird die Trägermetallschicht durch ein physikalisches und/oder chemisches Gasphasenabscheidungsverfahren auf der Haftschicht aufgebracht, insbesondere durch ein bereits oben für ein Aufbringen der Haftschicht beschriebenes Abscheidungsverfahren. Vorteilhaft können hier insbesondere auch Epitaxieverfahren sein. Vorteilhaft können damit Trägermetallschichten mit Abmessungen im Nanometerbereich oder Subnanometerbereich hergestellt werden, aber auch dickere Schichten bis zu 1 μm. Derart dicke

Schichten können vorteilhaft sein, wenn insbesondere bezüglich der Dicke sehr homogene Schichten gewünscht sind. Auch bezüglich der Homogenität einer elektrischen Leitfähigkeit in Schichtebenenrichtung kann eine derart dicke Schicht vorteilhaft sein.

Vorzugsweise umfasst die zumindest eine Graphitschicht eine Graphitfolie, die zumindest teilweise komprimierten expandierten Graphit umfasst. Graphitfolie ist besonders flexibel und kann vorteilhaft auch mit nicht ebenen Trägermetallschichten verbunden werden, ohne dass das entstehende Verbundelement unter mechanischen Spannungen steht.

Vorteilhafterweise umfasst der Pressschritt einen Kalandrierschritt. Durch Kalandrieren lassen sich vorteilhaft Lufteinschlüsse zwischen den einzelnen Schichten vermeiden, sowie auch großflächige Verbindungen herstellen. Auch lässt sich mittels Kalandrieren ein kontinuierlicher Fertigungsprozess durchführen. Es können aber auch andere Pressverfahren vorteilhaft sein, die zur Vermeidung von Lufteinschlüssen auch vorteilhaft unter Vakuum durchgeführt werden können.

Gelöst wird die Aufgabe des Weiteren mit einem Verbundelement gemäß Anspruch 15. Ein erfindungsgemäßes Verbundelement umfasst eine Graphitschicht und eine Trägermetallschicht, die mittels einer Haftschicht verbunden sind, insbesondere nach einem erfindungsgemäßen Verfahren, wobei die Haftschicht zumindest Silber umfasst, das durch einen Diffusionsschritt angeregt ist, zumindest teilweise in die Graphitschicht und die Trägermetallschicht einzudringen.

Eine vorteilhafte Ausgestaltung des Verbundelements ist in den abhängigen Ansprüchen angegeben.

Vorzugsweise ist das Metall der Haftschicht zumindest teilweise in die Graphitschicht und Trägermetallschicht eindiffundiert, so dass die Haftschicht zumindest im Wesentlichen ausschließlich durch eine Zwischenschicht gebildet ist, die im Wesentlichen aus einer Mischung aus dem Metall und dem Trägermetall und/oder aus dem Metall und dem Graphit besteht.

Das Verbundelement wird vorteilhaft für ein Dichtungselement eingesetzt. Gute Haftung, hohe chemische Beständigkeit und Temperaturbeständigkeit sind für ein Dichtungselement von großem Vorteil.

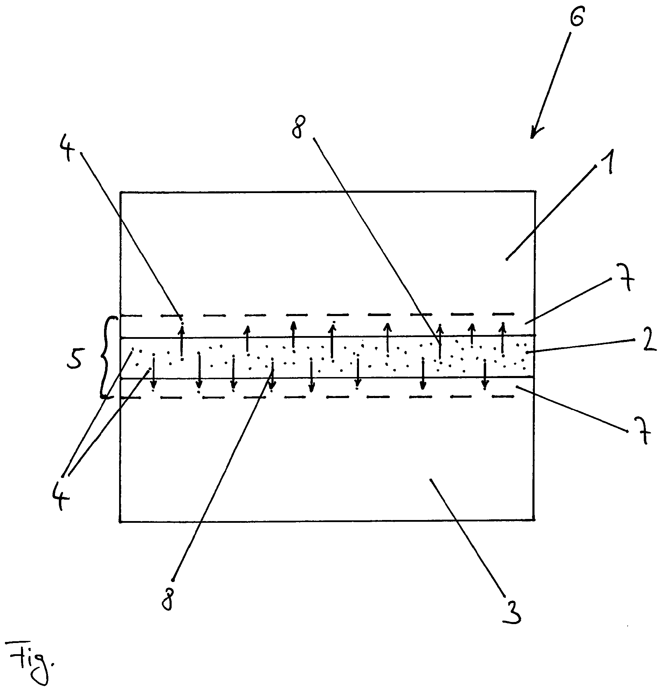

Weitere vorteilhafte Ausgestaltungen und Weiterbildungen sind im Ausführungsbeispiel dargestellt, das anhand der einzigen Figur erläutert wird, die schematisch einen Querschnitt eines gemäß einem erfindungsgemäßen Verfahren hergestellten erfindungsgemäßen Verbundelements zeigt.

Ein Edelstahlblech als Trägermetallschicht 1 wird mit einem herkömmlichen Verfahren von Fett, Staub etc. gereinigt. Mit PVD-Magnetronsputtern wird unter entsprechenden Vakuumbedingungen bei Zimmertemperatur eine 10 nm dünne Ag-Schicht als Haftschicht 2 auf die Trägermetallschicht 1 aufgebracht. Danach wird eine Graphitfolie als Graphitschicht 3 unter moderaten Temperatur- und Druckbedingungen auf die mit der Ag-Haftschicht versehene Seite der Trägermetallschicht 1 gedrückt. Das Andrücken der Graphitschicht 3 erfolgt unter Luft. Für das Andrücken wird eine herkömmliche beheizbare Pressvorrichtung (nicht dargestellt) verwendet. Durch das Andrücken und Aufheizen wird ein Diffusionsschritt bewirkt, bei dem Metall 4 aus der Haftschicht sowohl in die Graphitschicht 3 als auch das Edelstahlblech diffundiert, was in der Figur durch Pfeile 8 angedeutet ist. Dadurch ergibt sich im an die Haftschicht angrenzenden Bereich der Graphitschicht und der Trägermetallschicht 1 jeweils eine Zwischenschicht 7, in der Metall 4 aus der Haftschicht eindiffundiert vorliegt.

Es wird eine Verbindung 5, bzw. ein Verbundelement 6 aus einer beidseitig mit Ag beschichteten 50 $\mu$m dicken Edelstahlfolie, die zwischen zwei 0,8 mm dicke Graphitschichten gelegt wird, hergestellt. Bei einer Heiztemperatur von 436° C, einem Anpressdruck von 5,4 x 10$^6$ Pa und einer Anpressdauer von 10 - 30 Minuten werden mechanisch stabile Verbindungen und somit Verbundelemente erhalten. Mittels Ablösetests wird nachgewiesen, dass die Haftverbindung stärker als die Eigenfestigkeit des Graphits ist. Für Optimierungsprozesse ist zu berücksichtigen, dass bezüglich der Eindringtiefe des Metalls in die Schichten die Zeit t nur mit

$$\sqrt{t} \, ,$$

aber die Temperatur exponentiell eingeht. In weiteren Tests ist die Andruckdauer bei konstantem Druck von 5,4 x 10$^6$ Pa und konstanter Temperatur von 436°C schrittweise verkürzt worden. Selbst bei Andruckdauern von nur 5 Minuten konnten noch ausreichende Hafergebnisse erzielt werden. Bei einem reduziertem Druck von 2,4 x 10$^6$ Pa und einer Heiztemperatur von 436°C lag die Mindestandruckdauer für eine ausreichende Haftung bei 10 Minuten.

Die mechanische Festigkeit der Verbindungen wird mit Abreißtests bestimmt. Bei sehr guter Haftung reißt die Graphitschicht in sich, während die Trägermetallschicht vollständig mit darauf haftendem Graphit belegt ist. Bei schlechterer Haftung ist die Belegung der Trägermetallschicht mit Kohlenstoff niedriger als 100 %. Weitere Tests ergaben, dass auch bei größeren als den oben genannten Scherkräften eine sehr gute Haftung der verbundenen Schichten vorlag.

Die Vorteile des erfindungsgemäßen Verfahrens sind vielfältig. Die Ag-Haftschicht kann entweder auf die Graphitschicht oder, wie im obigen Beispiel, auf den Metallträger aufgebracht werden. Als Folge ihrer geringen Schichtdicke ist ein Schrumpfen, Verformen oder Fließen der Haftschicht ausgeschlossen. Dies ist ein großer Vorteil gegenüber dem Verhalten typischer Klebeschichten, deren Schichtdicken zwischen 0,2 $\mu$m und mehreren Mikrometern liegen und damit 10- bis 1000-mal dicker als die bevorzugte Dicke der Haftschicht sind. Damit kann durch das erfindungsgemäße Verfahren in erheblichem Maß Material eingespart werden. Dennoch können in einer Variante des Ausführungsbeispiels auch dickere Haftschichten eingesetzt werden. Auch bei dieser Variante reißt bei Aufbringen von Scherkräften die Graphitschicht in sich, was die sehr gute Haftung der Graphitschicht auf der Trägermetallschicht belegt.

Das Andrücken der Graphitschicht auf das Trägermetall erfolgt mit deutlich geringeren Drücken als bei herkömmlichen Verfahren. Somit können mit dem erfindungsgemäßen Verfahren auch weniger kräftig ausgelegte Maschinen eingesetzt werden. Für die Verwendung als Dichtungsmaterial ergibt sich dabei ein weiterer Vorteil, denn die Graphitschicht selbst wird vorteilhafterweise nicht oder nur geringfügig verfestigt und behält so weiterhin ihr elasto-plastisches Verformungsverhalten bei.

In einer Variante des Ausführungsbeispiels wird durch Hochvakuumbedampfen eine Silberschicht einer Dicke von 25 nm aufgebracht. In einer weiteren Variante wird vor dem Aufsputtern von Ag eine 20 nm dicke Cr-Schicht aufgebracht. Diese kann vorteilhaft als Haftvermittler für die anschließend aufgebrachte Haftschicht dienen. Bei unlegiertem Stahl, der selbst kein Chrom enthält, kann Chrom besonders gut als Haftvermittler dienen. Die Schichtdicke lässt sich mit allen bekannten CVD- und PVD-Verfahren exakt im Nanometerbereich einstellen, aber wenn gewünscht auch im Bereich von mehreren 100 nm.

Die Ag-Haftschicht ist thermisch stabil bis nahe an den Schmelzpunkt von Silber, der bei 916°C liegt. Damit ist sie den üblichen Klebeverbindungen weit überlegen. Die typischen Grenztemperaturen der typischen Klebeverbindungen liegen unterhalb von 200°C. Damit kann das erfindungsgemäß verbundene System Graphit/Trägermetall bei deutlich höheren Temperaturen eingesetzt werden, als bisher üblich, bis hin zur Obergrenze von 450°C. Diese Grenze folgt aus der verstärkten Neigung des Graphits zur Oxidation bei Temperaturen oberhalb von 450°C. Diese Obergrenze wird aufgrund der hohen Schmelztemperatur von Ag nicht beeinträchtigt.

Anders als übliche Klebstoffe wird die Ag-Haftschicht im Vakuum nicht ausgasen und somit Bauteile beschichten oder in chemische Prozesse eingreifen.

Da Silber chemisch sehr stabil ist, ist die Ag-Haftschicht chemisch weitaus stabiler als die üblichen Klebeverbindungen. Somit können beispielsweise durch das erfindungsgemäße Verfahren hergestellte Dichtungen auch bei aggressiven chemischen Prozessen eingesetzt werden, was bisher nicht möglich ist.

Da Ag als Metall eine elektrisch leitende Haftverbindung herstellt, ist das System Graphit/Metallträger insgesamt elektrisch leitend.

Das Verbundelement, das gemäß dem Ausführungsbeispiel erhalten wird, wird gemäß einer Variante als Dichtungselement eingesetzt. Gute Haftung, hohe chemische Beständigkeit und Temperaturbeständigkeit sind für ein Dichtungselement von großem Vorteil. Insbesondere ist die Dichtung mehrlagig aufgebaut, wobei bevorzugt zwei Graphitschichten die äußeren zwei Schichten eines mehrlagigen Aufbaus bilden.

Das Verfahren zur Aufbringung der Haftschicht ist vergleichsweise einfach. Mit Sputter- oder Aufdampftechniken sind auch großflächige Trägermetalle beschichtbar. Hierzu ist nur ein einziger Arbeitsgang ohne Nachbehandlung erforderlich. Eine Konservierung gegen Sauerstoff oder eine Weiterbearbeitung unter Vakuum ist nicht nötig. Die Einzelkomponenten können längere Zeit an Luft zwischengelagert werden. Das Verpressen des Graphits ist auch unter Luftatmosphäre möglich. Damit entfällt die Notwendigkeit einer teuren Vakuumverarbeitungsanlage, wie z.B. bei Vakuumlötverfahren. Auch gegenüber anderen herkömmlichen Lötverfahren oder anderen Verfahren, bei denen insbesondere eine Flüssigphase eines verbindenden Metalls auftritt, ist das erfindungsgemäße Verfahren mit einem deutlich geringeren Aufwand durchführbar.

Die Andruckdauer der Graphitschicht auf den Metallträger ist mit 5 - 30 Minuten bei diesem erfindungsgemäßen Verfahren, verglichen mit Andruckdauern im Stundenbereich bei anderen Klebeverfahren, relativ kurz und damit sehr wirtschaftlich.

Die Erfindung ist nicht auf die konkret beschriebenen Ausführungsformen beschränkt, sondern umfasst jede mögliche Kombination aus den in der Beschreibung, den Beispielen und den Ansprüchen genannten Merkmalen, soweit diese technisch sinnvoll sind und soweit sie in die Ansprüche fallen.

Insbesondere umfasst die Erfindung auch Drücke, Temperaturen und Verfahrensdauern, die nicht ausdrücklich genannt sind, bei denen aber mit dem jeweiligen Metall der Haftschicht optimale Verbindungen hergestellt werden können.

**Patentansprüche**

1.  Verfahren zur Herstellung einer Verbindung (5) zwischen einer Trägermetallschicht (1) und einer Graphitschicht (3), welches die folgenden Schritte umfasst:

    - Bereitstellen einer Trägermetallschicht (1)
    - Bereitstellen einer mit der Trägermetallschicht (1) zu verbindenden Graphitschicht (3)
    - Anordnen einer Haftschicht (2), die zumindest ein Metall (4) enthält, zwischen der Trägermetallschicht (1) und der Graphitschicht (3)
    - Verbinden der Trägermetallschicht (1) mit der Graphitschicht (3), wobei das Verbinden einen durch Hitze ausgelösten Diffusionsschritt umfasst, in dem das Metall (4) angeregt wird, zumindest teilweise in die Graphitschicht (3) und die Trägermetallschicht (1) einzudringen, wobei das Metall in der Festphase verbleibt, **dadurch gekennzeichnet, dass** die Haftschicht (2) als Metall (4) Silber enthält.

2.  Verfahren nach Anspruch 1, **dadurch gekennzeichnet, dass** die Trägermetallschicht (1) zumindest ein Trägermetall oder eine Trägermetalllegierung aus der Gruppe bestehend aus Eisen, Stahl, Edelstahl, Gold, Palladium, Titan, Kupfer, Bronze, Messing, Chrom, Nickel, Zink, Zinn, Indium, Mangan, Aluminium oder eine Legierung mit zumindest einem dieser Trägermetalle oder Trägermetalllegierungen daraus enthält.

3.  Verfahren nach einem oder mehreren der vorhergehenden Ansprüche, **dadurch gekennzeichnet, dass** der Diffusionsschritt einen Pressschritt und/oder einen Heizschritt umfasst.

4.  Verfahren nach einem oder mehreren der vorhergehenden Ansprüche, **dadurch gekennzeichnet, dass** die Haftschicht (2) vor dem Diffusionsschritt eine Dicke zwischen 1 nm und 100 nm, insbesondere zwischen 2 und 80 nm, insbesondere zwischen 5 und 50 nm aufweist.

5.  Verfahren nach einem oder mehreren der vorhergehenden Ansprüche, **dadurch gekennzeichnet, dass** die Haftschicht (2) vor dem Diffusionsschritt auf zumindest eine der beiden zu verbindenden Schichten (1, 3) aufgebracht ist oder aufgebracht wird.

6.  Verfahren nach Anspruch 5, **dadurch gekennzeichnet, dass** die Haftschicht (2) durch ein physikalisches und/oder chemisches Gasphasenabscheidungsverfahren auf zumindest eine der beiden zu verbindenden Schichten (1, 3) aufgebracht ist oder aufgebracht wird.

7.  Verfahren nach einem oder mehreren der vorhergehenden Ansprüche, **dadurch gekennzeichnet, dass** als Haftschicht (2) eine freitragende Folie, die das Metall (4) enthält, eingesetzt wird.

8.  Verfahren nach Anspruch 3, **dadurch gekennzeichnet, dass** die Pressdauer des Pressschritts bei bis 60 min, insbesondere zwischen 5 und 50 min, insbesondere zwischen 10 und 40 min liegt.

9.  Verfahren nach Anspruch 3, **dadurch gekennzeichnet, dass** die Heiztemperatur des Heizschritts zwischen einem Drittel des Schmelzpunkts des Metalls und unterhalb des Schmelzpunkts des Metalls (4) der Haftschicht (2) liegt, insbesondere zwischen der Hälfte des Schmelzpunkts und 5 K unterhalb des Schmelzpunkts.

10. Verfahren nach Anspruch 9, **dadurch gekennzeichnet, dass** die Temperatur oberhalb 300 °C, insbesondere oberhalb 400 °C, insbesondere oberhalb 500 °C liegt.

11. Verfahren nach einem oder mehreren der vorhergehenden Ansprüche, **dadurch gekennzeichnet,**

**dass** die Trägermetallschicht (1) auf der Haftschicht (2) mittels eines Beschichtungsverfahrens aufgebracht wird.

12. Verfahren nach Anspruch 11, **dadurch gekennzeichnet, dass** die Trägermetallschicht (1) durch ein physikalisches und/oder chemisches Gasphasenabscheidungsverfahren auf der Haftschicht (2) aufgebracht wird.

13. Verfahren nach einem oder mehreren der vorhergehenden Ansprüche, **dadurch gekennzeichnet, dass** der Pressschritt einen Kalandrierschritt umfasst.

14. Verfahren nach einem oder mehreren der vorhergehenden Ansprüche, **dadurch gekennzeichnet, dass** ein Verbundelement (6) aus zumindest einer Graphitschicht (3) und zumindest einer Trägermetallschicht mit einer alternierenden Abfolge von zumindest einer Trägermetallschicht (1) und zumindest einer Graphitschicht (3) hergestellt wird, wobei als eine äußere Schicht des Verbundelements eine Graphitschicht (3) und/oder eine Trägermetallschicht (1) verwendet wird.

15. Verbundelement (6) umfassend zumindest eine Graphitschicht (3) und zumindest eine Trägermetallschicht (1), die mittels einer Haftschicht (2) verbunden sind, **dadurch gekennzeichnet, dass** die Haftschicht (2) zumindest Silber umfasst das durch einen Diffusionsschritt angeregt worden ist, zumindest teilweise in die Graphitschicht (3) und die Trägermetallschicht (1) einzudringen.

16. Verbundelement (6) nach Anspruch 15, **dadurch gekennzeichnet, dass** das Silber der Haftschicht (2) vollständig in die Graphitschicht (3) und Trägermetallschicht (1) eindiffundiert ist, so dass die Haftschicht (2) ausschließlich durch eine Zwischenschicht (7) gebildet ist, die aus einer Mischung aus dem Silber (4) und dem Trägermetall und aus dem Silber und dem Graphit besteht.

17. Verbundelement (6) nach Anspruch 15 oder 16, **dadurch gekennzeichnet, dass** die zumindest eine Graphitschicht (3) eine Graphitfolie umfasst, die zumindest teilweise komprimierten expandierten Graphit umfasst.

18. Verwendung eines Verbundelements (6) nach einem oder mehreren der Ansprüche 15 bis 17 als Dichtungselement.

## Claims

1. Method for establishing a connection (5) between a carrier metal layer (1) and a graphite layer (3), comprising the following steps:

  - providing a carrier metal layer (1);
  - providing a graphite layer (3) to be connected to the carrier metal layer (1);
  - arranging an adhesive layer (2), which contains at least one metal (4), between the carrier metal layer (1) and the graphite layer (3);
  - connecting the carrier metal layer (1) to the graphite layer (3), the connection involving a heat-induced diffusion step in which the metal (4) is stimulated so as to at least partially penetrate the graphite layer (3) and the carrier metal layer (1), the metal remaining in the solid phase, **characterised in that** the adhesive layer (2) contains silver as the metal (4).

2. Method according to claim 1, **characterised in that** the carrier metal layer (1) contains at least one carrier metal or one carrier metal alloy from the group consisting of iron, steel, stainless steel, gold, palladium, titanium, copper, bronze, brass, chromium, nickel, zinc, tin, indium, manganese, aluminium or an alloy containing at least one of said carrier metals or carrier metal alloys thereof.

3. Method according to one or more of the preceding claims, **characterised in that** the diffusion step comprises a pressing step and/or a heating step.

4. Method according to one or more of the preceding claims, **characterised in that**, before the diffusion step, the adhesive layer (2) has a thickness between 1 nm and 100 nm, in particular between 2 and 80 nm, in particular between 5 and 50 nm.

5. Method according to one or more of the preceding claims, **characterised in that**, before the diffusion step, the adhesive layer (2) has been or is attached to at least one of the two layers to be connected (1, 3).

6. Method according to claim 5, **characterised in that** the adhesive layer (2) has been or is attached to at least one of the two layers to be connected (1, 3) by means of a physical and/or chemical vapour deposition method.

7. Method according to one or more of the preceding claims, **characterised in that** a self-supporting film containing the metal (4) is used as the adhesive layer (2).

8. Method according to claim 3, **characterised in that** the pressing duration of the pressing step is up to 60 min, in particular between 5 and 50 min, in particular between 10 and 40 min.

**9.** Method according to claim 3, **characterised in that** the heating temperature of the heating step is between one third of the melting point of the metal and below the melting point of the metal (4) of the adhesive layer (2), in particular between half of the melting point and 5 K below the melting point.

**10.** Method according to claim 9, **characterised in that** the temperature is above 300°C, in particular above 400°C, in particular above 500°C.

**11.** Method according to one or more of the preceding claims, **characterised in that** the carrier metal layer (1) is attached to the adhesive layer (2) by means of a coating method.

**12.** Method according to claim 11, **characterised in that** the carrier metal layer (1) is attached to the adhesive layer (2) by means of a physical and/or chemical vapour deposition method.

**13.** Method according to one or more of the preceding claims, **characterised in that** the pressing step comprises a calendering step.

**14.** Method according to one or more of the preceding claims, **characterised in that** a composite element (6) consisting of at least one graphite layer (3) and at least one carrier metal layer is produced so as to have an alternating sequence of at least one carrier metal layer (1) and at least one graphite layer (3), a graphite layer (3) and/or a carrier metal layer (1) being used as an outer layer of the composite element.

**15.** Composite element (6) comprising at least one graphite layer (3) and at least one carrier metal layer (1) which are connected by means of an adhesive layer (2), **characterised in that** the adhesive layer (2) comprises at least silver which has been stimulated by a diffusion step so as to at least partially penetrate the graphite layer (3) and the carrier metal layer (1).

**16.** Composite element (6) according to claim 15, **characterised in that** the silver of the adhesive layer (2) is completely diffused into the graphite layer (3) and carrier metal layer (1), such that the adhesive layer (2) is formed exclusively by an intermediate layer (7) consisting of a mixture of the silver (4) and the carrier metal and of the silver and the graphite.

**17.** Composite element (6) according to either claim 15 or claim 16, **characterised in that** the at least one graphite layer (3) comprises a graphite foil which comprises at least partially compressed expanded graphite.

**18.** Use of a composite element (6) according to one or more of claims 15 to 17 as a sealing element.

**Revendications**

**1.** Procédé de réalisation d'une liaison (5) entre une couche en métal de support (1) et une couche de graphite (3), comprenant les étapes suivantes :

- la fourniture d'une couche en métal de support (1) ;
- la fourniture d'une couche de graphite (3) à lier à la couche en métal de support (1) ;
- la disposition d'une couche de liaison (2), contenant au moins un métal (4), entre la couche en métal de support (1) et la couche de graphite (3) ;
- la liaison de la couche en métal de support (1) à la couche de graphite (3), la liaison comprenant une étape de diffusion induite par la chaleur, dans laquelle le métal (4) est stimulé de manière à pénétrer au moins partiellement dans la couche de graphite (3) et la couche en métal de support (1), le métal restant dans la phase solide, **caractérisé en ce que** la couche de liaison (2) contient de l'argent comme métal (4).

**2.** Procédé selon la revendication 1, **caractérisé en ce que** la couche en métal de support (1) contient au moins un métal de support ou un alliage métallique de support du groupe constitué du fer, de l'acier, de l'acier inoxydable, de l'or, du palladium, du titane, du cuivre, du bronze, du laiton, du chrome, du nickel, du zinc, de l'étain, de l'indium, du manganèse, de l'aluminium ou d'un alliage contenant au moins l'un de ces métaux de support ou de leurs alliages métalliques de support.

**3.** Procédé selon l'une ou plusieurs des revendications précédentes, **caractérisé en ce que** l'étape de diffusion comprend une étape de pressage et/ou une étape de chauffage.

**4.** Procédé selon l'une ou plusieurs des revendications précédentes, **caractérisé en ce que**, avant l'étape de diffusion, la couche de liaison (2) a une épaisseur comprise entre 1 et 100 nm, en particulier entre 2 et 80 nm, en particulier entre 5 et 50 nm.

**5.** Procédé selon l'une ou plusieurs des revendications précédentes, **caractérisé en ce que**, avant l'étape de diffusion, la couche adhésive (2) est appliquée sur au moins l'une des deux couches (1, 3) à lier.

**6.** Procédé selon la revendication 5, **caractérisé en ce que** la couche de liaison (2) est appliquée, par un procédé de dépôt physique et/ou chimique en phase vapeur, sur au moins l'une des deux couches (1, 3) à lier.

7. Procédé selon l'une ou plusieurs des revendications précédentes, **caractérisé en ce qu'**un film autoportant contenant le métal (4) est utilisé comme couche de liaison (2).

8. Procédé selon la revendication 3, **caractérisé en ce que** le temps de pressage à l'étape de pressage peut aller jusqu'à 60 min, est compris en particulier entre 5 et 50 min, en particulier entre 10 et 40 min.

9. Procédé selon la revendication 3, **caractérisé en ce que** la température de chauffage à l'étape de chauffage est comprise entre un tiers du point de fusion du métal et en dessous du point de fusion du métal (4) de la couche adhésive (2), en particulier entre la moitié du point de fusion et 5 K en dessous du point de fusion.

10. Procédé selon la revendication 9, **caractérisé en ce que** la température est supérieure à 300 °C, en particulier supérieure à 400 °C, en particulier supérieure à 500 °C.

11. Procédé selon l'une ou plusieurs des revendications précédentes, **caractérisé en ce que** la couche en métal de support (1) est appliquée sur la couche de liaison (2) au moyen d'un procédé de revêtement.

12. Procédé selon la revendication 11, **caractérisé en ce que** la couche en métal de support (1) est appliquée par un procédé de dépôt physique et/ou chimique en phase vapeur sur la couche de liaison (2).

13. Procédé selon l'une ou plusieurs des revendications précédentes, **caractérisé en ce que** l'étape de pressage comprend une étape de calandrage.

14. Procédé selon l'une ou plusieurs des revendications précédentes, **caractérisé en ce qu'**un élément composite (6) est préparé à partir d'au moins une couche de graphite (3) et d'au moins une couche en métal de support avec une séquence alternée d'au moins une couche en métal de support (1) et d'au moins une couche de graphite (3), une couche de graphite (3) et/ou une couche en métal de support (1) étant utilisée en tant que couche externe de l'élément composite.

15. Élément composite (6) comprenant au moins une couche de graphite (3) et au moins une couche en métal de support (1), lesquelles sont reliées au moyen d'une couche de liaison (2), **caractérisé en ce que** la couche de liaison (2) comprend au moins de l'argent stimulé par une étape de diffusion, à introduire au moins partiellement dans la couche de graphite (3) et dans la couche en métal de support (1).

16. Élément composite (6) selon la revendication 15, **caractérisé en ce que** l'argent de la couche de liaison (2) est complètement diffusé dans la couche de graphite (3) et la couche en métal de support (1), de sorte que la couche de liaison (2) est formée exclusivement par une couche intermédiaire (7) composée d'un mélange d'argent (4) et de métal de support, et d'argent et de graphite.

17. Élément composite (6) selon la revendication 15 ou 16, **caractérisé en ce que** l'au moins une couche de graphite (3) comprend un film de graphite qui comprend du graphite expansé au moins partiellement comprimé.

18. Utilisation d'un élément composite (6) selon l'une ou plusieurs des revendications 15 à 17 en tant qu'élément d'étanchéité.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0616884 A2
- US 5100049 A
- US 5322740 A
- US 5113052 A